(19) Europäisches Patentamt
European Patent Office
Office européen des brevets

(11) Publication number: **0 448 176 A1**

(12) **EUROPEAN PATENT APPLICATION**

(21) Application number: **91200624.4**

(22) Date of filing: **20.03.91**

(51) Int. Cl.5: **C08K 5/13**, C08K 5/06, C08K 3/22, C08K 5/02, C08L 73/00

(30) Priority: **21.03.90 US 496760**
**21.03.90 US 496722**
**21.03.90 US 496728**

(43) Date of publication of application: **25.09.91 Bulletin 91/39**

(84) Designated Contracting States: **BE DE FR GB IT NL**

(71) Applicant: **SHELL INTERNATIONALE RESEARCH MAATSCHAPPIJ B.V.**
**Carel van Bylandtlaan 30**
**NL-2596 HR Den Haag(NL)**

(72) Inventor: **Notorgiacomo, Vincent James, Jr.**
**19 Delaware Avenue**
**Rockaway, New Jersey 07866(US)**

(74) Representative: **Tuijn, Jan Warnaar et al**
**Shell Internationale Research Maatschappij B.V., Patents, Licensing & Trade Marks Division, P.O. Box 302**
**NL-2501 CH The Hague(NL)**

(54) **Flame-retardant compositions.**

(57) Flame-retardant polymer compositions comprising a linear alternating copolymer of carbon monoxide and at least one olefinically unsaturated compound, and at least a flame-retarding quantity of at least one organohalogen compound containing one or more polyhalogen substituted rings and of a compound selected from the group consisting of antimony oxides, metal borates and mixtures thereof, wherein the compositions comprise, in addition polytetrafluoroethylene in a sufficient amount to render the compositions non-dripping.

EP 0 448 176 A1

The present invention relates to flame-retardant polymer compositions, and more in particular to such flame-retardant compositions based on linear alternating copolymers of carbon monoxide and at least one ethylenically unsaturated compound.

The general class of polymers of carbon monoxide and one or more ethylenically unsaturated compounds has been known for some years. According to U.S. Patent No. 2,495,286, such polymers of relatively low carbon monoxide content are produced in the presence of free radical catalysts such as benzoyl peroxide. British Patent No. 1,081,304 discloses such polymers of higher carbon monoxide content produced in the presence of alkylphosphine complexes of palladium as catalyst.

More recently, the class of linear alternating polymers of carbon monoxide and olefinically unsaturated compounds, now known as polyketones, has become of greater interest, in part because of improved methods of production. Such methods are shown, for example, by European Patent Applications Nos. 181 014, and 121 965. The disclosed processes employ as catalyst, inter alia, a compound of a Group VIII metal such as palladium, an anion of a non-hydrohalogenic acid having a pKa below 2 and a bidentate ligand of phosphorus. The resulting polymers are generally high molecular weight thermoplastic polymers having utility in the production of articles such as containers for food and drink and parts for the automotive industry or structural members for use in the construction industry.

With regard to any plastic material employed in a public application, some concern must be shown for the consequences of the material catching fire and burning. It is known that some polymers will burn more easily than others. Polymers such as e.g. polyvinylchloride produce, upon combustion, gaseous compounds which have a flame-retarding effect. With polymers, which do not produce such flame-retardant gaseous compounds upon combustion, it is common practice to mix said polymers with compounds which have the potential to slow down the binder ignition and/or the growth of the fire. Such compounds are generally referred to as flame-retardant compounds. The flame retarding effect of such compounds generally stems from a chemical reaction of said compounds at an elevated temperature, e.g. decomposition, which results in the generation of flame-retardant compounds.

Flame-retardant polymer compositions comprising a linear alternating copolymer of carbon monoxide and at least one olefinically unsaturated compound, and at least a flame-retarding quantity of at least one organohalogen compound containing one or more polyhalogen substituted rings and of a compound selected from the group consisting of antimony oxides, metal borates and mixtures thereof are the subject of earlier filed, non pre-published EP-A-390291. Although a high degree of flame retardency can be achieved using these compositions, a further improvement is in some instances desirable, in particular with respect to the dripping behaviour of the compositions during their burning. The aim of the present invention is to afford such improved flame-retardant compositions.

As a result of continuing and extensive research and experimentation it has now been found that by the addition of polytetrafluoroethylene to the flame-retardant polymer compositions, referred to hereinbefore, it is possible to render said compositions non-dripping, for which purposes, in general, only a relatively small quantity of the polytetrafluoroethylene is needed. In addition, it was found that, surprisingly, the compositions possess such flame-retardant properties that they pass the UL (Underwriters Laboratories) 94 V-0 flammability test.

Accordingly, the invention relates to flame-retardant polymer compositions comprising a linear alternating copolymer of carbon monoxide and at least one olefinically unsaturated compound, and at least a flame-retarding quantity of at least one organohalogen compound containing one or more polyhalogen substituted rings and of a compound selected from the group consisting of antimony oxides, metal borates and mixtures thereof, wherein the compositions comprise in addition polytetrafluoroethylene in a sufficient amount to render the compositions non-dripping.

The polymers from which the compositions of the invention are produced are linear alternating polymers of carbon monoxide and at least one ethylenically unsaturated compound. Suitable ethylenically unsaturated compounds have up to 20 carbon atoms inclusive, preferably up to 10 carbon atoms inclusive and include wholly aliphatic hydrocarbons such as ethylene and other $\alpha$-olefins including propylene, butene-1, octene-1 and dodecene-1; arylaliphatic compounds containing an aryl substituent on an otherwise aliphatic molecule, particularly an aryl substituent on a carbon atom of the ethylenic unsaturation, such as styrene, p-methylstyrene, m-methylstyrene and p-ethylstyrene; as well as unsaturated compounds containing hetero atoms such as O, N, P and halogen, and exemplified by compounds such as methyl acrylate, methyl methacrylate, vinyl acetate, undecenoic acid, 6-chlorohexene, N-vinylpyrrolidone and the diethylester of vinyl-phosphonic acid. Preferred polymers are copolymers of carbon monoxide and ethylene or terpolymers of carbon monoxide, ethylene and an aliphatic $\alpha$-olefin of 3 or more carbon atoms, particularly propylene.

The physical properties of the polymer will be determined in part by the molecular weight and by

whether the polymer is a copolymer or a terpolymer. Typical melting points are from 175 °C to 300 °C, more typically from about 210 °C to 280 °C.

Preferred terpolymers in the flame-retardant composition of the present invention are terpolymers of carbon monoxide, ethylene and propylene wherein the ethylene to propylene molar ratio in the polymer is at least 2:1, preferably from 10:1 to 100:1.

The organohalogen compounds as mentioned hereinbefore will suitably be chlorine and/or bromine groups containing compounds and preferably bromine groups containing compounds. They include polyhalogenated cycloaliphatic compounds such as perchlorodicyclopentadiene, bis(hexachloro-2-norborneno)-[a,e]cyclooctane and pentabromochlorocyclohexane; polyhalogenated aromatic compounds such as 2,3,4,5,6-pentabromoethylbenzene, 1,2-bis(2,4,6-tribromophenoxy)ethane, decabromodiphenyl oxide, tetrabromobisphenol A, a tetrabromobisphenol A carbonate oligomer or an ether derivative of tetrabromobisphenol A.

The organohalogen compound is preferably a compound selected from the group consisting of

a) brominated polystyrene comprising units of the general formula

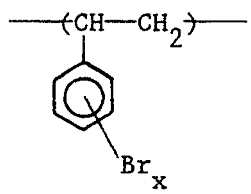

in which x is an integer of from 1 to 5,

b) brominated diphenyl ether of the general formula

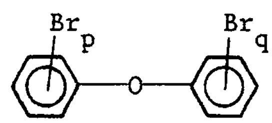

in which p and q each are integers of from 2 to 5, preferably from 3 to 5,

c) brominated polyphenylene oxide comprising units of the general formula

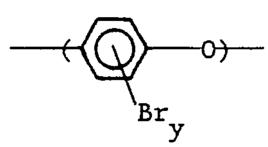

in which y is an integer of from 2 to 4,

d) chlorinated and brominated phthalimides of the general formulae

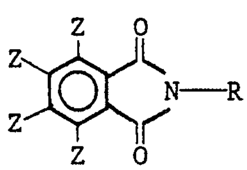

and

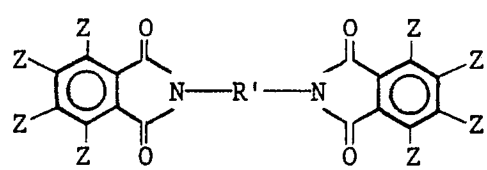

in which R represents a hydrogen atom, a $C_1$-$C_{10}$-alkyl group, a phenyl group, a naphthyl group, the group $C_6H_4Br$ or the group $C_6H_2Br_3$; R' represents a single bond, an alkylene radical having from 2 to 4 carbon atoms, p-phenylene, or p,p'-diphenylene; and Z represents chlorine or bromine, and

e) tetrabromobisphenol A/carbonate oligomers, preferably 2,4,6-tribromophenyl terminated tetrabromobisphenol A/carbonate oligomers.

Compounds mentioned under c) and d) are preferred because these compounds induce less thermal degradation of the composition upon applying the melt-processing techniques mentioned hereinafter.

The brominated polystyrenes referred to have preferably an average degree of bromination of from 2 to 4 bromine atoms per phenyl ring. The average degree of bromination of the brominated polyphenylene oxide amounts preferably from 2.5 to 3.5 bromine atoms per phenyl ring. It will be appreciated that they will comprise at least two of the units of the general formulae indicated above, and suitably at least 100.

Exemplary brominated diphenyl ethers include pentabromodiphenyl ether, hexabromodiphenyl ether, octabromodiphenyl ether, decabromodiphenyl ether, etc. Decabromodiphenyl ether is preferred in order to obtain high heat resistance, and octabromodiphenyl ether is preferred in order to obtain improved dispersibility.

Of the phthalimides indicated above the brominated phthalimides are especially preferred. Other suitable tetrahalophthalic acid derivatives include tetrabromophthalic anhydride, tetrachlorophthalic anhydride and diallyl tetrabromophthalate.

Although the halogen content of the organohalogen compounds employed is not critical, the compounds have suitably a high halogen content, preferably above 50 % weight. The organohalogen compounds indicated herein are commercially available compounds.

Good results can be obtained upon selecting the organohalogen compounds from the group consisting of brominated styrene having, on average, 3 bromine atoms attached to each phenyl group, decabromodiphenyl ether, polydibromophenylene oxide, 1,2-ethylene-bis(tetrabromophthalimide) and 2,4,6-tribromophenyl terminated tetrabromobisphenol A/carbonate oligomers comprising 1-10 tetrabromobisphenol A/carbonate repeating units.

The metal borate which may be used in the flame retardant composition of the present invention will suitably be a zinc borate and preferably a zinc borate hydrate such as $Zn[B_3O_3(OH)_5]H_2O$, $ZnO.B_2O_3.2H_2O$, $3ZnO.2B_2O_3.5H_2O$, $2ZnO.3B_2O_3.3.5H_2O$ and mixtures thereof, $2ZnO.3B_2O_3.3.5H_2O$ being a preferred hydrated zinc borate. Preferably an alkaline earth metal carbonate is also incorporated to replace a portion of the borate, both for cost reasons and for preparing mechanical properties.

Exemplary antimony oxides which may be used in the practice of this invention include antimony trioxide ($Sb_2O_3$), antimony tetraoxide ($Sb_2O_4$), antimony pentoxide ($Sb_2O_5$) and the like with antimony trioxide being particularly preferred.

The flame-retardant compounds which may be used in the compositions of the present invention are generally available in the form of fine powders, wherein the average particle size may be in the range of from 0.05 $\mu$ to 100 $\mu$ although smaller or larger average particle sizes are not excluded.

Another component employed in the present invention is polytetrafluoroethylene (PTFE) which is a commercially available material. The PTFE is used in an amount sufficient to render the composition non-dripping. Amounts from 0.1 to 5 percent by weight, based on the total compositions, are preferred. More preferred are compositions having 0.3 to 1 percent by weight of PTFE.

The organohalogen compound(s) is (are) employed in an amount sufficient to render the resulting composition flame-retardant.

The following relative amounts of polymer, organohalogen compounds and PTFE are preferred (all numbers expressed in weight percent of the total composition):

| Package | Preferred | More Preferred |
|---|---|---|
| Polyketone Polymer | 50 to 98% | 60 to 85% |
| Antimony oxides and/or metal borates | 1 to 30% | 3 to 15% |
| Organohalogen compound | 2 to 40% | 5 to 20% |
| PTFE | 0.1 to 5% | 0.3 to 1% |

Note, the percentages should add up to 100 percent in actual compositions.

The relative amount of antimony oxides and/or the metal borates to the amount of the organohalogen compound(s) is suitably in a weight ratio of 1:1 to 1:5, preferably 1:1 to 1:2.5.

The flame retardants may be employed with other materials such as ammonium thiosulfate, asbestos, alkali metal carbonates or bicarbonates, e.g., potassium bicarbonate or stannous or stanic oxide. The preferred compositions of the invention, however, are those wherein the flame retardants noted above are employed as substantially the sole material used to impart flame retardancy to the polyketone composition.

In a preferred embodiment the compositions also contain a small amount of a, commercially available, alpha-olefin/unsaturated carboxylic acid copolymer. This copolymer is a copolymer of an alpha-olefin and

an alpha,beta-ethylenically unsaturated carboxylic acid, with an optional small amount of a third monomer. The alpha-olefin/alpha,beta-ethylenically unsaturated carboxylic acid polymer is present in an amount of from 0.1% by weight to 10% by weight, based on the total blend. Amounts from 0.5% by weight to 3% by weight on the same basis are preferred. The alpha-olefin component of the olefin/unsaturated polymer is suitably an alpha-olefin of up to 10 carbon atoms inclusive, preferred is ethylene. The unsaturated carboxylic acid component of the olefin/unsaturated acid polymer is suitably an alpha,beta-ethylenically unsaturated carboxylic acid of up to 10 carbon atoms inclusive, of which acrylic acid and methacrylic acid are preferred.

The flame-retardant compositions may be produced by mixing the flame-retardant compound or mixtures thereof throughout the polyketone polymer. The method of forming the composition is not critical provided the method results in a uniform mixture of said flame-retardant compound throughout at least the outer layer of the polyketone polymer. In a preparation of a composition useful in the form in which it is produced, only the outermost portion of the composition needs to be provided with such flame-retardant compound. However, in most applications, a flame retardant composition is produced which is then processed further, and in such applications the production of a substantially uniform mixture of polyketone polymer and flame-retardant compound is preferred. In one modification, the compositions are produced by dry blending the components in particulate form and subsequently converted to a substantially uniform composition by application of heat and pressure. Alternatively, the compositions are produced by heating the polyketone polymer until molten and the flame-retardant compound is mixed throughout the polymer by use of a high-shear mixer or extruder.

The polymer composition, in addition to polymer and flame-retardant compound(s), may incorporate other additives which do not detract from the flame-retardant character of the composition. Examples of such additives are plasticizers, mould release agents and antioxidants, which are added by blending or other conventional methods, together with or separately from the flame-retardant compounds.

The flame-retardant compositions may be processed by injection moulding, pressure forming or other conventional methods. They are characterised by properties of flexibility and strength in addition to flame retardancy and are useful in a variety of applications, particularly where exposure to elevated temperature is likely to be encountered.

The invention will be further illustrated by the following examples.

## EXAMPLE

The polyketone employed was a linear alternating terpolymer of carbon monoxide, ethylene and propylene prepared by employing a catalyst composition formed from palladium acetate, trifluoracetic acid and 1,3-bis[di(2-methoxyphenyl)phosphino]propane. The polymer had a melting point of 220 °C and a limiting viscosity number (LVN), measured at 60 °C in meta-cresol, of 1.8 dl/g.

The polymer contained 0.5% weight 1,3,5-tris(3,5-di-tert.-butyl-4-hydroxyphenyl)-2,4,6-trimethylbenzene, a commercially available antioxidant, and 0.5% weight ethylene/methacrylic acid copolymer.

Using this polymer, compositions were made to test the following commercially available flame retarding additives at a loading which provided a 6% wt halogen level in the final composition.

A - brominated polystyrene, having, on average, 3 bromine atoms attached on each phenyl group,
B - decabromodiphenyl ether,
C - polydibromophenylene oxide,
D - 1,2-ethylene-bis(Tetrabromophthalimide),
E - 1,2-ethylene-bis(Tetrabromophthalimide) White,
F - brominated epoxy and antimony oxide, and
G - 2,4,6-tribromophenyl-terminated tetrabromo bisphenol A-carbonate oligomer

Each formulation also contained antimony trioxide ($Sb_2O_3$) and polytetrafluoroethylene (PTFE). The conditions for compounding and moulding are described below:

Compounding was done by mixing the components in a twin screw extruder having no vent and pelletizing into a water bath. The extrusion temperature was 225 to 235 °C and the screw speed was 50-100 $min^{-1}$.

Moulding of test samples was done on an injection moulding machine under the following conditions:
Barrel temperature - 230, 240, 250 °C
Mould temperature - 80 °C
Pressure - 100 MPa (15000 psi)
Screw speed - 160 $min^{-1}$
Time - 15 seconds, 10 seconds cooling

The results of UL testing and mechanical testing are given in Table 1.

The additives A, C, E and G were further evaluated using formulations with:

A) no antimony trioxide with the same amount of flame-retardant

B) no antimony trioxide and twice the flame-retardant

C) 2/3 of the original amount of flame-retardant with proportional amounts of antimony trioxide and PTFE.

None of the new twelve formulations yielded products that were V-O rated.

TABLE 1

| Additive | Flame Retardant Amount % wt | $Sb_2O_3$ Amount % wt | PTFE Amount % wt | 1.59 mm 1), 2) | 0.79 mm 1), 2) | Flexural Strength k psi | Flexural Strength MPa | Flexural Modulus kk psi | Flexural Modulus MPa | Tensile Strength k psi | Tensile Strength MPa | Notched Impact ft*lb/in | Notched Impact kJ/m |
|---|---|---|---|---|---|---|---|---|---|---|---|---|---|
| None | 0.0 | 0.0 | 0.0 | BN,BN | BN,BN | -- | -- | -- | -- | -- | -- | -- | -- |
| None | 0.0 | 0.0 | 0.0 | --,-- | --,-- | 7.6 | 52 | 0.214 | 1470 | 10.1 | 70 | 4.0 | 0.21 |
| A | 8.8 | 5.5 | 0.5 | V0,V0 | V0,V0 | 10.9 | 75 | 0.303 | 2090 | 10.2 | 70 | 8.3 | 0.44 |
| A | 8.8 | 5.5 | 0.5 | V0,V0 | V0,V0 | -- | -- | -- | -- | 9.4 | 65 | 6.7 | 0.36 |
| B | 7.2 | 5.5 | 0.5 | V0,-- | V1,-- | 9.9 | 68 | 0.296 | 2040 | 8.1 | 56 | 3.8 | 0.20 |
| C | 9.4 | 5.5 | 0.5 | V0,-- | V0,-- | 11.1 | 76 | 0.321 | 2210 | 9.6 | 66 | 13.0 | 0.69 |
| C | 9.4 | 5.5 | 0.5 | --,V0 | --,V0 | -- | -- | -- | -- | 9.3 | 64 | 9.4 | 0.50 |
| C | 9.4 | 5.5 | 0.5 | --,V0 | --,V0 | 11.4 | 79 | 0.324 | 2230 | 9.0 | 62 | 11.9 | 0.64 |
| D | 9.1 | 5.5 | 0.5 | V0,-- | V0,-- | 10.6 | 73 | 0.316 | 2180 | 8.2 | 56 | 4.0 | 0.21 |
| E | 9.1 | 5.5 | 0.5 | V0,-- | V0,-- | 10.1 | 70 | 0.302 | 2080 | 8.4 | 58 | 4.4 | 0.23 |
| E | 9.1 | 5.5 | 0.5 | --,V0 | --,V0 | -- | -- | -- | -- | 9.5 | 65 | 4.0 | 0.21 |
| E | 9.1 | 5.5 | 0.5 | --,V0 | --,V0 | -- | -- | -- | -- | -- | -- | 2.6 | 0.14 |
| F | 11.3 | 5.5 3) | 0.5 | V0,V0 | V0,V0 | 10.4 | 72 | 0.313 | 2160 | 11.6 | 80 | 2.7 | 0.14 |
| F | 11.3 | 5.5 3) | 0.5 | V0,V0 | V0,V0 | -- | -- | -- | -- | -- | -- | -- | -- |
| G | 10.3 | 5.5 | 0.5 | V0,-- | V1,-- | 10.9 | 75 | 0.307 | 2120 | 9.0 | 62 | 5.0 | 0.27 |
| G | 10.3 | 5.5 | 0.5 | V0,V0 | V0,V0 | 10.0 | 69 | 0.280 | 1930 | 10.5 | 72 | 3.9 | 0.21 |
| G | 10.3 | 5.5 | 0.5 | V0,V0 | V0,V0 | 10.4 | 72 | 0.302 | 2080 | 8.5 | 59 | 3.0 | 0.16 |

1) Condition A of UL 94, at least 48 hours at 23 deg. C, 50% RH; BN = burned

2) Condition B of UL 94, 70 deg. C for 168 hours; BN = burned

3) a precompounded blend of brominated epoxy and antimony trioxide was used. Straight antimony trioxide was added to bring the total antimony trioxide level up to 5.5 %wt.

## Claims

1. Flame-retardant polymer compositions comprising a linear alternating copolymer of carbon monoxide and at least one olefinically unsaturated compound, and at least a flame-retarding quantity of at least

one organohalogen compound containing one or more polyhalogen substituted rings and of a compound selected from the group consisting of antimony oxides, metal borates and mixtures thereof, wherein the compositions comprise, in addition polytetrafluoroethylene in a sufficient amount to render the compositions non-dripping.

**2.** Compositions as claimed in claim 1, characterized in that the organohalogen compound is selected from the group consisting of

a) brominated polystyrene comprising units of the general formula

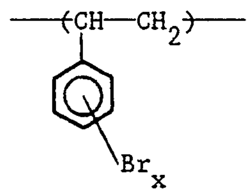

in which x is an integer of from 1 to 5,

b) brominated diphenyl ether of the general formula

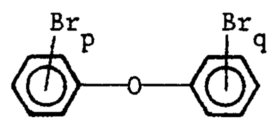

in which p and q each are integers of from 2 to 5,

c) brominated polyphenylene oxide comprising units of the general formula

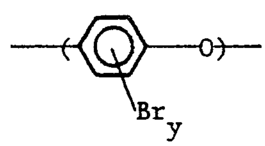

in which y is an integer of from 2 to 4,

d) chlorinated and brominated phthalimides of the general formulae

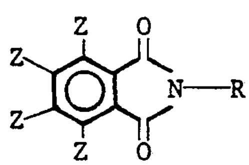

and

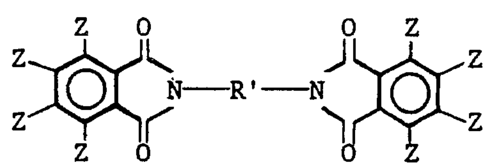

in which R represents a hydrogen atom, a $C_1$-$C_{10}$-alkyl group, a phenyl group, a naphthyl group, the group $C_6H_4Br$ or the group $C_6H_2Br_3$; R' represents a single bond, an alkylene radical having from 2 to 4 carbon atoms, p-phenylene, or p,p'-diphenylene; and Z represents chlorine or bromine, and

e) 2,4,6-tribromophenyl terminated tetrabromobisphenol A/carbonate oligomer.

**3.** Compositions as claimed in claim 2, characterized in that the organohalogen compound(s) is (are) selected from the group consisting of brominated styrene having, on average, 3 bromine atoms attached to each phenyl group, decabromodiphenyl ether, polydibromophenylene oxide, 1,2-ethylene-bis(tetrabromophthalimide) and 2,4,6-tribromophenyl terminated tetrabromobisphenol A/carbonate oligomers comprising 1-10 tetrabromobisphenol A/carbonate repeating units.

**4.** Compositions as claimed in any of claims 1-3, characterized in that the antimony oxide is antimony trioxide.

**5.** Compositions as claimed in any of claims 1-3, characterized in that the compositions comprise from 5

to 20 %w of the organohalogen compound(s) and from 3 to 15 %w of the compound selected from the group consisting of antimony oxides, metal borates and mixtures thereof, based on the weight of the composition.

6. Compositions as claimed in any of claims 1-5, characterized in that the compositions comprise from 0.1 to 5 %w of polytetrafluoroethylene.

7. Compositions as claimed in claim 6, characterized in that the compositions comprise from 0.3 to 1 %w of polytetrafluoroethylene.

8. Flame-retardant compositions as claimed in any of claims 1-7, wherein the alternating copolymer is a carbon monoxide ethylene copolymer or a carbon monoxide-ethylene-propylene terpolymer.

9. Flame-retardant compositions comprising terpolymers as claimed in claim 8, wherein the ethylene:propylene molar ratio in the terpolymer is at least 2:1.

European Patent Office

# EUROPEAN SEARCH REPORT

Application Number

**EP 91 20 0624**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A,D | US-A-4 885 318 (R. L. DANFORTH ET AL.)<br>* column 3, line 66 - column 6, line 47 * * column 9, line 60 - column 10, line 57; claims 1-17 & EP-A-390291 *<br>- - - | 1-5,8,9 | C 08 K 5/13<br>C 08 K 5/06<br>C 08 K 3/22<br>C 08 K 5/02<br>C 08 L 73/00 |
| A | US-A-4 870 133 (R. G. LUTZ ET AL.)<br>* column 6, lines 1 - 13; claims 1-6 *<br>- - - | 1,6 | |
| A | EP-A-0 345 857 (SHELL INTERNATIONALE RESEARCH MAATSCHAPPIJ)<br>* claims 1-9 *<br>- - - - - | 1,6 | |
| | | | **TECHNICAL FIELDS SEARCHED (Int. Cl.5)** |
| | | | C 08 K<br>C 08 L<br>C 08 G |

The present search report has been drawn up for all claims

| Place of search | Date of completion of search | Examiner |
|---|---|---|
| Berlin | 12 June 91 | BOEKER R.B. |

CATEGORY OF CITED DOCUMENTS

X: particularly relevant if taken alone
Y: particularly relevant if combined with another document of the same catagory
A: technological background
O: non-written disclosure
P: intermediate document
T: theory or principle underlying the invention

E: earlier patent document, but published on, or after the filing date
D: document cited in the application
L: document cited for other reasons

&: member of the same patent family, corresponding document